# EUROPEAN PATENT APPLICATION

(11) **EP 1 860 883 A1**
(43) Date of publication of application: **28.11.2007**
(21) Application number: 06010851.1
(22) Date of filing: 26.05.2006
(51) Int. Cl.: H04N 7/18, G08B 21/02

(54) **A monitoring system**

(71) Applicant: Techwall Electronics Company Limited, Hong Kong (HK)
(72) Inventor: The designation of the inventor has not yet been filed
(74) Representative: Beattie, Alex Thomas Stewart

(57) **Abstract**

A monitoring system comprising a surveillance unit (1), operable to gather video data and corresponding audio data, and having a transmitter arrangement (9) for transmission of the audio and video data; and a monitor unit (12), having a receiver arrangement (13) and being operable to receive video and audio data transmitted by the surveillance unit, wherein the transmitter arrangement of the surveillance unit is operable to transmit video data over a first channel having a first frequency, and to transmit audio data corresponding to the video data over a second channel having a second frequency, the video data not being transmitted over the second channel.

## Description

### Description of Invention

This invention relates to a monitoring system, and in particular concerns a wireless video monitoring system, of the type used for monitoring babies and patients that require continuous observation.

It is known to provide video monitoring systems which comprise a surveillance unit and a monitor unit, wherein the surveillance unit is able to gather both video and audio data, and to transmit the data to the monitor unit where it may be viewed and heard by a user. The data is normally transmitted over a channel utilising a carrier signal in the 2.4 Ghz range. In the US, the frequencies typically used are 2435-2465 Mhz, and in Europe the signal is typically in the range 2400-2483.5 Mhz. Since the analogue video signal requires a large band width for proper transmission of images, and according to FCC and EC regulations, the signals must be transmitted at a frequency of around 2.4 Ghz. Radio waves in this frequency range have the characteristics of high penetrative power, but a relatively short transmitting range, and the signal to the monitor unit will generally be lost once the distance between the surveillance unit and the monitor unit exceeds a certain distance.

The power with which the signals may be transmitted by the surveillance unit is limited by the relevant authorities (10 mW in Europe and 1 W in the US), and if these regulations are observed then the practical upper limit on the distance between the surveillance unit and the monitor unit is around 10-15 metres when the system is used indoors.

It is an object of the present invention to seek to provide an improved monitoring system.

Accordingly, one aspect that the present invention provides a monitoring system comprising: a surveillance unit, operable to gather video data and corresponding audio data, and having a transmitter arrangement for transmission of the audio and video data: and a monitor unit, having a receiver arrangement and being operable to receive video and audio data transmitted by the surveillance unit, wherein the transmitter arrangement of the surveillance unit is operable to transmit video data over a first channel having a first frequency, and to transmit audio data corresponding to the video data over a second channel having a second frequency, the video data not being transmitted over the second channel.

Advantageously, audio data is not transmitted over the first channel.

Preferably, the second frequency is lower than the first frequency.

Conveniently, the second frequency is lower than the first frequency by at least a factor of 2.

Advantageously, the second frequency is lower than the first frequency by at least a factor of 5.

Preferably, the second frequency is lower than the first frequency by a factor of at least 50.

Conveniently, the range over which the second channel may be received is longer than the range over which the first channel may be received.

Advantageously, the transmitter arrangement comprises first and second transmitters, for transmitting data over the first and second channels respectively.

Preferably, the receiver arrangement comprises two separate receivers, operable to receive data over the first and second channels respectively.

Conveniently, the surveillance unit may operate in a first mode, in which both video and audio signals are continuously transmitted, and in a second mode, in which audio and video signals are not transmitted continuously, and wherein the mode in which the surveillance unit operates may be controlled from the monitor unit.

Preferably, when the surveillance unit is in the second mode, audio and video signals are transmitted only when noise above a predetermined level is detected by the surveillance unit.

Advantageously, the monitor unit comprises a transmitter, and the surveillance unit comprises a receiver, to allow signals to be transmitted from the monitor unit and received by the surveillance unit.

Preferably, the surveillance unit is operable to play audio data.

Conveniently, the monitor unit is operable to gather audio data, or retrieve audio data from a memory thereof, and transmit the audio data to the surveillance unit for playback.

Advantageously, the surveillance unit comprises a memory in which audio data may be stored, and the surveillance unit is operable to play the audio data stored in the memory.

Another aspect of the present invention provides a monitoring system comprising: a surveillance unit, operable to gather video data and corresponding audio data, and having a transmitter arrangement for transmission of the audio and video data: and a monitor unit, having a receiver arrangement and being operable to receive video and audio data transmitted by the surveillance unit, wherein the surveillance unit may operate in a first mode, in which both video and audio signals are continuously transmitted, and in a second mode, in which audio and video signals are not transmitted continuously, and wherein the mode in which the surveillance unit operates may be controlled from the monitor unit.

In order that the present invention may be more readily understood, embodiments thereof will now be described, by way of example, with reference to the accompanying figures, in which:
Figure 1 shows components of a surveillance unit for use with the present invention; and

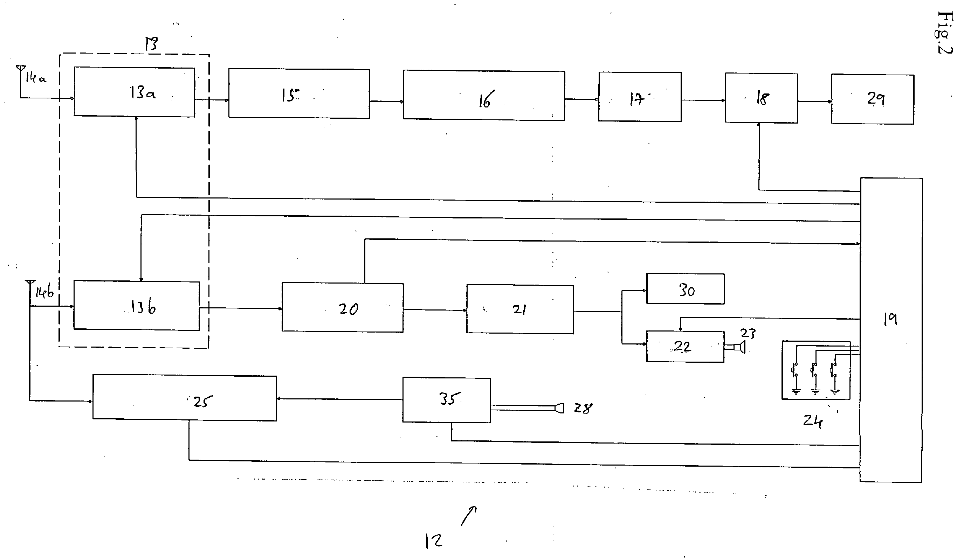

Figure 2 shows components of a monitor unit for use with the present invention.

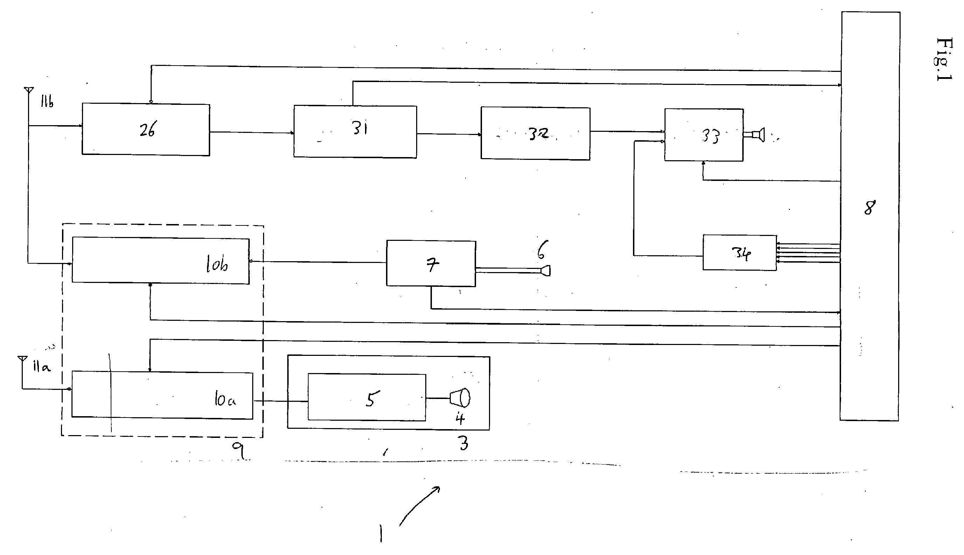

Turning to figure 1, a monitoring system embodying the present invention comprises a surveillance unit 1, which may take any shape and is preferably provided with a rugged housing (not shown). The surveillance unit 1 comprises a video camera 3, which consists of a lens 4 located in an aperture in the housing and a charge coupled device (CCD) 5 located behind the lens 4, so that incoming light rays will be focused by the lens 4 onto the CCD 5 where they form an image, which can be converted into electrical signals, as is known in the art.

The surveillance unit 1 further comprises a microphone 6 which is operable to detect sounds in the vicinity of the surveillance unit 1 and convert these sounds into electrical signals. Preferably the microphone 6 is a condenser microphone with an audio amplifier 7.

Both the video camera 3 and the microphone 6 are connected to a processor 8, which is in turn connected to a transmission arrangement 9.

The processor 8 controls the flow of signals from the video camera 3 and the microphone 7 to the transmitter arrangement 9 for transmission. The transmission arrangement 9 is operable to transmit the video signals over a first channel, and preferably this first channel operates in the 2.4 Ghz range, as discussed above.

The transmitter arrangement 9 is also operable simultaneously to transmit audio signals, corresponding to the video signals that are transmitted, over a second channel, having a second frequency. Preferably, the second frequency is lower than the operational frequency of the first channel, and more preferably is lower than the operational frequency of the first channel by at least a factor of 2. In embodiments of the invention the frequency of the second channel is lower than that of the first by a factor of at least 5, or at least 50. Preferably, the second channel operates in one of the following frequency ranges:
26.957-27.283 Mhz
40.660-40.700 Mhz
49.820-49.990 Mhz
446.000-446.100 Mhz
462.563-467.713 Mhz
864.800-865.000 Mhz
902.000-928.000 Mhz

Preferably, the transmission arrangement 9 comprises two separate transmitters 10a, 10b, with the video signal output from the camera 3 being used to modulate the carrier of the first transmitter 10a, while the audio signal output from the microphone amplifier 7 is used to modulate the carrier of the second transmitter 10b. Two aerials 11 a, 11 b are provided to transmit over the first and second channels.

The monitoring system further comprises a monitor unit 12. The monitor unit 12 comprises a receiver arrangement 13, which is preferably connected to two aerials 14a, 14b, capable of detecting signals emitted by the transmitter arrangement 9 of the surveillance unit 1.

The receiver arrangement 13 is able to decode signals transmitted by the transmitter arrangement 9, and in certain embodiments of the invention may comprise two separate receivers 13a, 13b for receiving the video and audio signals respectively.

A first one 13a of the receivers receives the video images transmitted by the surveillance unit 1, and signals from this receiver 13a pass through an IF amplifier and filter 15, through a wideband PLL FM demodulator 16, through a video amplifier 17 and finally to a video driver 18. A processor 19 of the monitor unit 12 controls the flow of video signals from the video driver 18 to a screen 29, on which video signals received by the receiver arrangement 13 may be shown as images, in a conventional manner. A second one 13b of the receivers receives the audio signals transmitted by the surveillance unit 1, and signals from this receiver 13b pass through an IF amplifier and demodulator 20, to a BPF and audio amplifier 21, through a power amplifier 22 and finally to a loudspeaker 23, which is able to play sound data received by the receiver arrangement 13. Once again, the processor 19 of the monitor unit 12 controls the flow of audio signals from the power amplifier 22 to the loudspeaker 23. A LED driver 30 causes an LED to light up when audio signals are received.

Controls 24 are also provided (preferably in the form of switches and/or buttons), to allow a user to operate the various functions of the monitor unit 12, as will be described in greater detail below.

In normal operation, the surveillance unit 1 may be set up so that a subject, for instance, a baby or infant, is within the field of view of the video camera 3. Video images of the subject, along with corresponding audio data, may then be acquired by the video camera 3 and microphone 6 of the surveillance unit 1. As described above, video data corresponding to the gathered video images is transmitted by the transmitter arrangement 9 over a first channel having a first frequency, and audio data corresponding to the audio information picked up by the microphone 6 is transmitted by the transmitter arrangement 9 over a second channel having a second frequency.

If the monitor unit 12 is switched on and correctly configured, and is within a relatively short distance of the surveillance unit 1, video and audio data will both be received by the receiver arrangement 13, and the data will be displayed and played to the user via the screen 19 and loudspeaker 23 of the monitor unit 12. Under such circumstances the system will appear to operate in the same way as a conventional monitoring system.

If, however, the distance between the surveillance unit 1 and the monitor unit 12 becomes so great that the video data transmitted by the surveillance unit 1 can no longer be adequately received by the monitor unit 12, it is likely that the audio data transmitted by the surveillance unit 1 will still be receivable by the monitor unit 12. This is because the audio data is transmitted over a second channel having a second frequency, which is preferably lower than the frequency of the channel over which the video data is transmitted, and the range of the signals carrying the audio data are therefore significantly greater. If the frequencies listed above are used then, a range of around 150m may be achieved for indoor use. While the channel of this nature, having a relatively low frequency, would be unlikely to have sufficient bandwidth to carry video signals, audio signals may still be effectively transmitted.

This means that, if the video data output by the surveillance unit 1 cannot be received, a person using the monitor unit 12 will still be able to receive audio signals, and will therefore still be aware if the subject makes a noise (or indeed if another audible event has happened in the vicinity of the surveillance unit 1), and thus is likely to require attention.

In addition, it has been found that, if the audio signal is transmitted separately, the 2.4 Ghz video signal may be received over a longer range when compared to the situation in which both the video and audio signals are transmitted over the same 2.4 Ghz channel.

In preferred embodiments of the present invention, the monitor unit 12 is provided with a transmitter 25 (which is operable to transmit via the second aerial 14b of the monitor unit 12), and the surveillance unit 1 is provided with a receiver 26 (which is operable to receive via the second aerial 10b of the surveillance unit 1), which is able to receive signals transmitted by the transmitter 25 of the monitor unit 12. A user may then use the monitor unit 12 to control functions of the surveillance unit 1, as will be described in greater detail below.

Preferably, communication from the monitor unit 12 to the surveillance unit 1 takes place over the second channel, i.e. that used to transmit audio data from the surveillance unit 1 to the monitor unit 12.

It has been observed that 2.4 Ghz radio waves have high penetrative power, and it is believed that a surveillance unit, continuously transmitting radio waves of this frequency in the proximity of an infant, carries a considerable health risk. This may particularly be the case for babies and infants, whose skulls are not yet fully developed.

In embodiments of the invention, the surveillance unit 2 may have a first mode, designated as ON, in which video (and preferably also audio) data is continuously transmitted. The surveillance unit 2 may also be provided with a "VOX" mode, in which audio and video signals are transmitted by the transmitter arrangement 9 of the surveillance unit 1 only when noise is detected by the microphone 6 of the surveillance unit 1, and possibly for a short time after noise is no longer detected. A mode of this type is known in the art. This is desirable since it is believed that there may be detrimental effects to persons (particularly infants) in the proximity of the surveillance unit 1, due to exposure to radiation, when the surveillance unit 1 transmits over the 2.4 Ghz range channel, and in this mode the transmission will take place only for relatively short periods of time.

In the VOX mode, a user of the monitoring system may receive no signals from the surveillance unit 1, and therefore receive a degree of assurance that the subject being monitored by the surveillance unit 1 is not making a noise and hence does not require immediate attention. However, the user may still wish to see a video image of the subject, to ensure that the subject is not in any danger. Preferably, therefore, the surveillance unit 1 may also be placed in a REMOTE mode. In this mode, if the surveillance unit is initially not transmitting data, the user may activate the controls 24 on the monitor unit 12, causing an appropriate signal to be transmitted from the transmitter 25 of the monitor unit 12, which is in turn received by the receiver 26 of the surveillance unit 1, and causes the first transmitter 10a of the surveillance unit 1 to be switched on, thus initiating the transmission of video images over the first channel. Once the user has viewed the video image then received by the monitor unit 12, the user may switch off the first transmitter 10a of the surveillance unit 1 remotely, again using the controls 24 on the monitor unit 12. In preferred embodiments, when the transmission of video signals has not been activated remotely, the surveillance unit 1 is in a mode which behaves in the same way as the VOX mode.

The surveillance unit 1 preferably also has an OFF or STANDBY mode. A user may choose which of the modes of the surveillance unit 1 is most appropriate and place the surveillance unit 1 in this mode, and preferably this is done manually.

In preferred embodiments of the invention, the surveillance unit 1 may be provided with a loudspeaker 27. The loudspeaker 27 is connected to the receiver 26 via an IF amplifier and demodulator 31 and a BPF and audio amplifier 32, and finally by a power amplifier 33. Operation of this loudspeaker 27 may be controlled by the controls 24 on the monitor unit 12. In preferred embodiments, the surveillance unit 1 may be operable to play music or other sound data (which may be stored in a memory 34 controlled by the processor 8, or may be transmitted from a memory of the monitor unit 12). A user of the system may, therefore, control the playback of a lullaby or other soothing music through the loudspeaker 27 of the surveillance unit 1, by operating the controls 24 on the monitor unit 12. Alternatively, or in addition, the monitor unit 12 may be provided with a microphone 28 (along with an appropriate amplifier 35), and may be able to transmit the voice of the user from the monitor unit 12 to the surveillance unit 1 for playback.

It is hoped, that using these functions, a user of the monitoring system may be able to respond to some situations in which the subject being monitored requires attention, without the need physically to go to the subject.

In this specification, when audio data is referred to as corresponding to video data, this is to be interpreted as meaning that the audio data which has been received in the vicinity of the field of view of the equipment recording the video data, such that the video and audio data may be recombined to create an audio-visual presentation.

It will be appreciated that embodiments of the present invention may provide a flexible monitoring system which will find utility in many circumstances, which has the capacity to allow monitoring over greater distances, to mitigate potential health risks arising from exposure to radiation, and may also allow a user to deal with certain situations remotely.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A monitoring system comprising:
a surveillance unit (1), operable to gather video data and corresponding audio data, and having a transmitter arrangement (9) for transmission of the audio and video data: and
a monitor unit (12), having a receiver arrangement (13) and being operable to receive video and audio data transmitted by the surveillance unit (1),
wherein the transmitter arrangement (9) of the surveillance unit (1) is operable to transmit video data over a first channel having a first frequency, and to transmit audio data corresponding to the video data over a second channel having a second frequency, the video data not being transmitted over the second channel.

2. A monitoring system according to Claim 1, in which audio data is not transmitted over the first channel.

3. A monitoring system according to Claim 1 or 2, wherein the second frequency is lower than the first frequency.

4. A monitoring system according to Claim 3, wherein the second frequency is lower than the first frequency by at least a factor of 2.

5. A monitoring system according to Claim 4, wherein the second frequency is lower than the first frequency by at least a factor of 5.

6. A monitoring system according to Claim 5, wherein the second frequency is lower than the first frequency by a factor of at least 50.

7. A monitoring system according to any preceding claim, wherein the range over which the second channel may be received is longer than the range over which the first channel may be received.

8. A monitoring system according to any preceding claim, wherein the transmitter arrangement (9) comprises first and second transmitters (10a, 10b), for transmitting data over the first and second channels respectively.

9. A monitoring system according to any preceding claim, wherein the receiver arrangement (13) comprises two separate receivers (13a, 13b), operable to receive data over the first and second channels respectively.

10. A monitoring system according to any preceding claim, wherein the surveillance unit (1) may operate in a first mode, in which video signals are continuously transmitted, in a second mode, in which video signals are not transmitted continuously, and in a third mode, in which the transmission of video signals may be controlled from the monitor unit (12).

11. A monitoring system according to Claim 10 wherein, when the surveillance unit (1) is in the second mode, audio and video signals are transmitted only when noise above a predetermined level is detected by the surveillance unit (1).

12. A monitoring system according to any preceding claim, wherein the monitor unit (12) comprises a transmitter (25), and the surveillance unit (1) comprises a receiver (25), to allow signals to be transmitted from the monitor unit (12) and received by the surveillance unit (1).

13. A monitoring system according to Claim 11 or 12, wherein the surveillance unit (1) is operable to play audio data.

14. A monitoring system according to Claim 13, wherein the monitor unit (12) is operable to gather audio data, or retrieve audio data from a memory thereof, and transmit the audio data to the surveillance unit (1) for playback.

15. A monitoring system according to Claim 13 or 14, wherein the surveillance unit (1) comprises a memory in which audio data may be stored, and the surveillance unit (1) is operable to play the audio data stored in the memory.

16. A monitoring system comprising:
a surveillance unit (1), operable to gather video data and corresponding audio data, and having a transmitter arrangement (9) for transmission of the audio and video data: and
a monitor unit (12), having a receiver arrangement (13) and being operable to receive video and audio data transmitted by the surveillance unit (1),
wherein the surveillance unit (1) may operate in a first mode, in which video signals are continuously transmitted, in a second mode, in which video signals are not transmitted continuously, and in a third mode, in which the transmission of video signals may be controlled from the monitor unit (12).
